# EUROPEAN PATENT SPECIFICATION

(11) **EP 0 480 767 B1**
(45) Date of publication and mention of the grant of the patent: **04.05.1994**
(21) Application number: 91309404.1
(22) Date of filing: 11.10.1991
(51) Int. Cl.: F16L 1/12, F16L 1/26, B66C 23/18

(54) **Tool for simultaneous vertical connections**
Werkzeug für gleichzeitige vertikale Verbindungen
Outil pour jonctions simultanées et verticales

(30) Priority: 12.10.1990 BR 9005130
(43) Date of publication of application: 15.04.1992
(73) Proprietor: PETROLEO BRASILEIRO S.A. - PETROBRAS, Rio de Janeiro (BR); CONFORJA EQUIPETROL S.A., Bahia (BR)
(72) Inventor: Mota, Juenal Dionisio Souza, Rio de Janeiro (BR); Miguez, Joel de Carvalho, Bahia (BR)
(74) Representative: Barlow, Roy James

(56) References cited:
- EP-A- 0 196 712
- DE-A- 3 802 166
- GB-A- 2 110 782
- US-A- 4 648 629

## Description

This invention refers to a universal tool for simultaneous vertical connections, the main purpose of which is to locate in one single instrument, which can be easily handled and operated and is capable of maintenance, the whole active system which includes appropriate mechanisms for correctly positioning a connector bridge on two flow line terminals pertaining to equipment units to be connected.

In subsea completion systems, the use of which is increasing and is becoming more complex with their orientation towards deep waters, it is becoming vital, as a major step towards the development and improvement of those systems, to provide a remote connection system which does not sophisticate the most complex equipment units in the system, and which provides the maintenance and adjustment in the connection system without the necessity of handling those complex equipment units.

DE-A-3802166 discloses a manipulating device for transporting and positioning articles and comprising a rotatable column with at least one arm which extends radially and is extensible and contractable longitudinally. The ends of the arms are provided with gripping devices for holding articles. The pivot for each of the radial arms is adjustable longitudinally (vertically) of the column.

With the purpose of complying with the above, this invention provides a tool for use in establishing simultaneous vertical connections in a system which introduces a concept of subsea remote connection between two terminal mandrels of flow lines which, being located in different structures or equipment units, present deviations due to for example manufacturing, erection, or installation tolerances. It is necessary for the tool which performs this connection, to be provided with systems which render it compatible with those deviations. The connection between the flow line terminals is carried out by way of a module (bridge) containing two hydraulic connectors united by a bridge of flexible or articulated lines which absorb the movements which may become necessary to accommodate the deviations in question.

With the mechanisms (hydraulic and mechanical) required for the correction of the vertical, horizontal and/or angular deviations, the tool makes it possible to fit the connector module, and it is also possible for the module to be recovered for eventual maintenance, thus rendering all the active elements of the system recoverable to allow for greater flexibility in the use of the equipment and a rather significant simplification concerning the problem of tolerances.

One advantage offered is that the interruption of operation of one well for the purpose of maintenance of some equipment need not interfere with the production of the other wells, since the concept herein presented implies a modularization per well.

Another advantage is the transfer, to the tool for installation of the intervention connectors, of the whole active system required for the compensation of the deviations, thereby avoiding the use of very strict manufacturing and erection tolerances of the equipment units which directly or indirectly affect the final positioning of the flow line terminals, since the whole system required for the correction of misalignments is located in the tool and is capable of being maintained and adjusted.

Another advantage is the simplification of the operation of the more complex equipment units and the reduction of the possibility of failure of these equipment units during operation, since they no longer have the active connection of the system. Instead the possibility of failure in the connection is transferred from the complex equipment units to the connector bridge, thereby reducing the possibility of failure in the installation and enabling the maintenance of those equipment units, since those equipment units will have a smaller number of seals, and a smaller number of simultaneous connections, because the connections are distributed in connector bridges (one per well), and there are, in addition, no longer any flexible or articulated lines in those equipment units. The handling of those equipment units is as far as possible avoided since it is sometimes becoming complex and time-consuming.

Still another advantage is the standardization of one single tool to make connections between terminals containing any arrangement of flow lines, said standardization allowing the tool to be utilized with any arrangement of flow lines pertaining to any equipment units which are to be connected.

Accordingly this invention provides a universal tool for simultaneous vertical connections as defined by claim 1.

In order that the invention may more readily be understood the following description is given, merely by way of example, with reference to the accompanying drawings, in which:

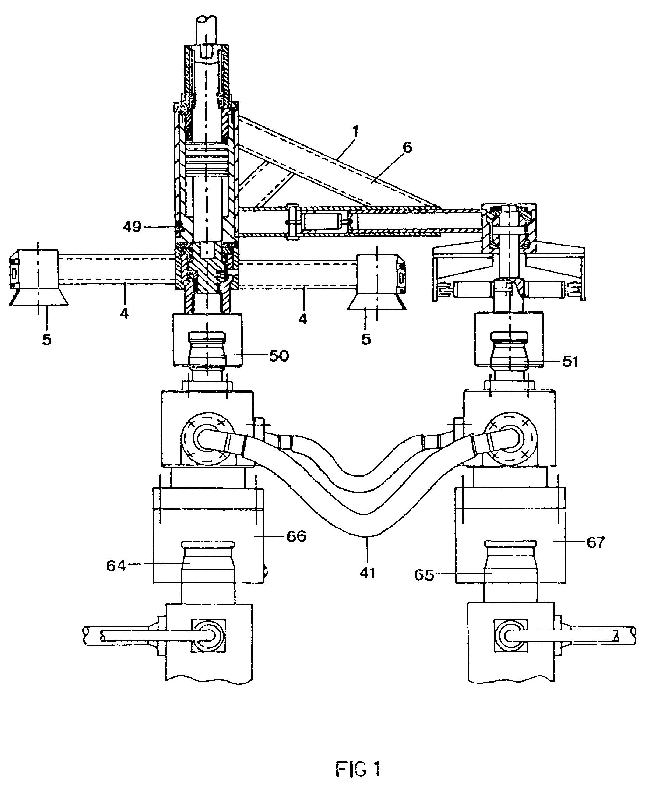

Figure 1 is a sectional view of one embodiment of the tool of the invention for simultaneous vertical connections, installed on a connector bridge which contains the jumper of flow lines necessary for the connection between two flow line terminals (also represented in the Figure);
Figure 2 is a sectional view of the tool alone;
Figure 3 is a detailed section of the vertical compensation system of the tool;
Figure 4 is a detailed section of the rotational system of the tool; and
Figure 5 is a detailed section of the angular compensation system of the tool.

As can be seen from the Figures, the universal tool 1 for simultaneous vertical connections can be utilized for the installation of a connector bridge 41 containing a jumper of flexible lines (flow lines, hydraulic umbilical line, and/or electric cable; in any desired arrangement). These lines achieve the connection between two flow line terminals 64, 65. The tool 1 includes:
(i) two vertical hydraulic connectors 2, 3 for locking to the fishing mandrels 50, 51 of the connector bridge 41,
(ii) a vertical compensation system with upward and downward movement of the structure 6 which supports the second connector 3,
(iii) a rotation system for turning the structure 6 through a set of bearings 54, 55, 56,
(iv) a system for guideline orientation including, externally to the casing 7, two structural arms 4, each containing at its end a guide funnel 5 utilized for orientation with cables and guide posts,
(v) a horizontal movement system using a hydraulic cylinder 17 which has the shaft 18 coupled to a telescopic arm 20,
(vi) an angular compensation system utilized in the second connector 3 and employing a spherical-shaped articulation 24 which, by means of a pin 58, supports the supporting shaft 27 of the second connector 3, and
(vii) a rotation system for turning the second connector 3 and operated through the simultaneous extension and retraction of the shafts of the cylinders 21, 22.

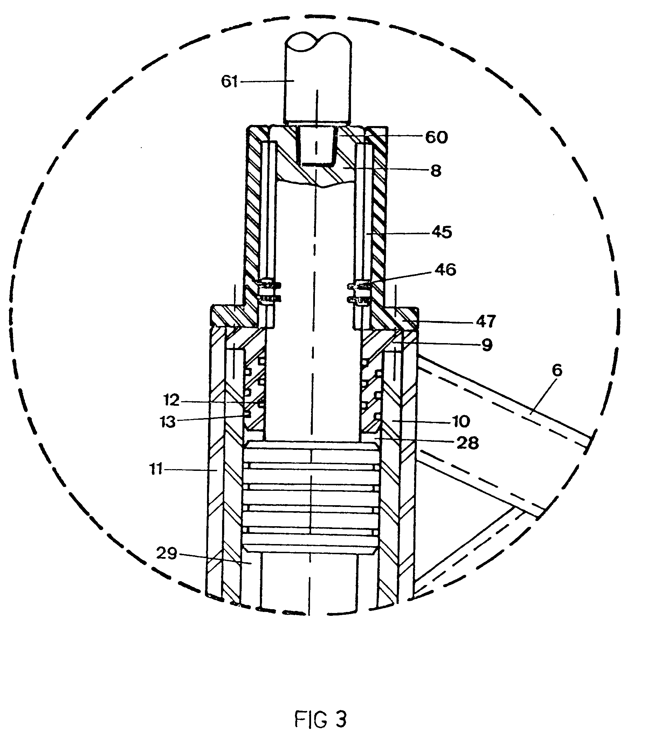

Through suitable mechanisms the tool 1 of this invention thus correctly positions a connector bridge 41 on two flow line terminals 65, 65 pertaining to equipment units to be connected. Firstly the first connector 66 of the bridge is connected on the first flow line terminal 64, where the correct positioning and the necessary load are achieved through the movement of the operating column 61 (Fig. 3); during this movement the second connector 67 of the bridge is out of position.

The orientation of the second connector 67 of the bridge is then achieved through a combination of movements, as follows:-
(a) the structure 6 is rotated by turning the central body 8 of the operating column 61 on a set of bearings 54, 55, 56 within the casing;
(b) vertical movement is effected through a system located below the connection with the components 8, 9, 10, 11 (Fig. 3) of the operating column 6;
(c) horizontal movement is effected by means of a hydraulic system 17, 18 installed in a telescopic arm 19, 20;
(d) rotational movement is effected by means of a hydraulic system 21, 22 externally coupled in a cylinder 52 located at the upper part of the second connector 3;
(e) angular movement is possible by means of a spherical coupling system 24 set in split housings 25, 26 of spherical internal section, on which is attached the supporting shaft of the second connector 3 of the connection tool 1; and
(f) rotational movement of the second connector of the tool is effected by means of a hydraulic system (21, 22) located at the upper part of the second connector.

In the vertical compensation system shown in Fig. 3, upward movement of the structure 6 is achieved by the application of fluid pressure in the upper chamber 28, and the downward movement is achieved through the application of pressure in the lower chamber 29. The movement of the structure 6 is achieved by means of the components 9, 10, 11 which are the moving components driven by means of the fluid pressure while the central component 8 forms the rigid stator element of the system so that the components 9, 10, 11 may move relative to it. The sealing required for the action of the hydraulic pressure in the chambers 28, 29 is achieved by means of dynamic sealing rings 12, 13.

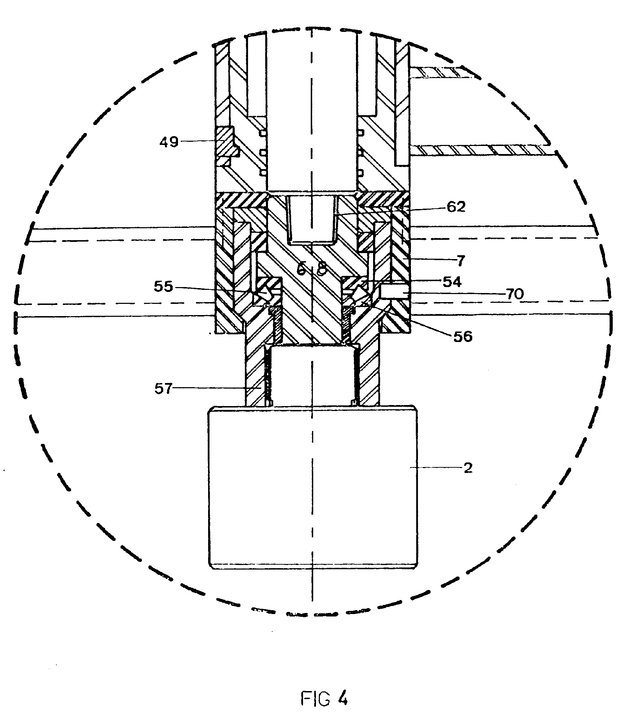

In the system for turning the structure 6, the central component 8 presents at its upper end (Fig. 3) a female thread 60 compatible with a male thread of the operating column 61, and presents at its lower end (Fig. 4) a male thread 62 for coupling to a body 68 which is supported in a set of bearings 54, 55, 56 which allow rotation of the structure 6 which positions the second connector 3 when the operating column 61 is rotated. A body 57 allows the set of bearings to be independent of the first connector 2 which remains locked and fixed during the rotation of the structure 6 with the second connector 3. The rotation is transmitted to the structure 6 by means of the slot keys 46, 49, the slot key 46 working in a vertical slot 45 (Fig. 3) in the sleeve 47 so as to allow for the movement of the vertical compensation system.

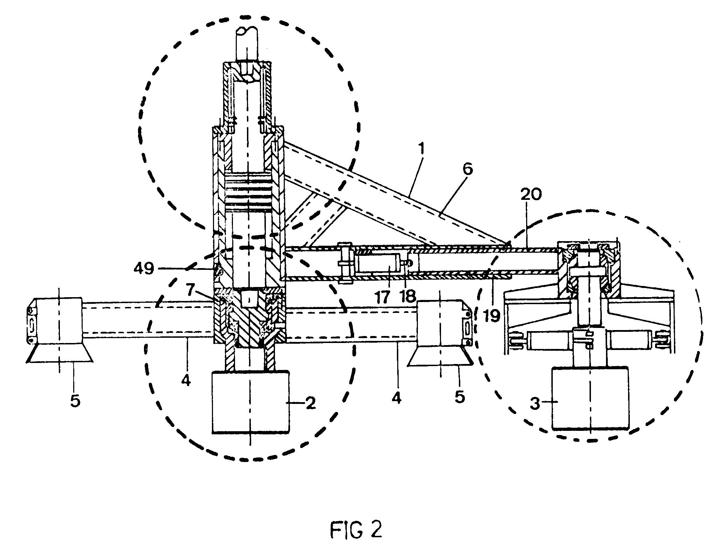

In the horizontal movement system shown in Fig. 2, extension or retraction (through hydraulic pressure in the cylinder 17) causes the shaft 20 to move horizontally, carrying with it the second connector 3.

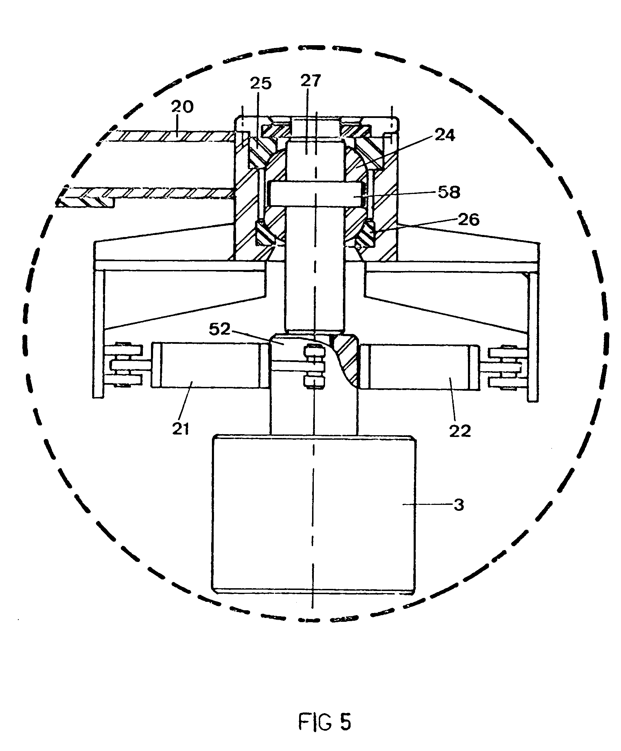

In the angular compensation system shown in Fig. 5, the articulation 24 works, in response to accommodation of movements between the second connector 67 of the connector bridge 41 and the second flow line terminal 65, by sliding in the spherical-shaped housings 25, 26.

With respect to the guideline orientation system shown in Fig. 4, said orientation is utilized for the correct positioning of the first connector 66 of the bridge during system installation operation and orientation of the first connector 2 during re-installation of the tool 1 for removal of the connector bridge 41. The attachment of the guide arm 4 to the first connector 2 is achieved by means of a slot key 70.

It must be pointed out that the tool 1 for simultaneous vertical connections can be utilized for connection between any flow line arrangements, and therefore has a hydraulic telescopic system (Fig. 2) which provides the connector bridge with the necessary spacing of the lines to be connected.

## Claims

1. A tool for simultaneous vertical connections to be used in installing a connector bridge (41) containing a jumper of flexible lines which achieve the connection between two flow line terminals (64, 65), including: vertical hydraulic connectors (2, 3) for locking to fishing mandrels (50, 51) of the connector bridge (41), said vertical connectors (2, 3) including supporting shafts (68,27); a vertical compensation system with upward and downward movement of a structure (6) which supports said second connector (3); a turning system for rotating the structure (6) by means of a set of bearings (54, 55, 56) located in the lower part of a casing (7) of the vertical compensation system to allow said structure (6) to be rotated in relation to said first connector (2); a guideline orientation system external to the casing (7), consisting of two structural arms (4), each presenting at its end a guide funnel (5) utilized for orientation with cables and guide posts; a horizontal movement system having a preferably hydraulic ram (17) coupled to a telescopic arm (20) carrying said second connector (3); an angular compensation system for said second connector (3) including a spherical-shaped articulation (24) which, by means of a pin (58), supports the supporting shaft (27) of said second connector (3); and means for rotating said second connector (3) by extension and retraction of a preferably hydraulic ram (21, 22).

2. A tool according to claim 1, wherein, in said vertical compensation system, the upward movement of said structure (6) is achieved through the application of fluid pressure in a chamber (28).

3. A tool according to claim 1 or 2, wherein, in said vertical compensation system, the downward movement of said structure (6) is achieved through the application of fluid pressure in a chamber (29).

4. A tool according to claim 2 or 3, wherein the vertical movement of said structure (6) is achieved by means of moving components (9, 10, 11) driven by fluid pressure, and wherein a central component (8) forms the stator of the system relative to which the components (9, 10, 11) move.

5. A tool according to any one of claims 1 to 4, wherein, in said turning system for rotating the structure (6), the or a central component (8) has at its lower end a male thread (62) for coupling to a body supported by said set of bearings (54, 55, 56).

6. A tool according to claim 5, wherein said set of bearings (54, 55, 56) allows the turning of said structure (6) which positions said second connector (3) by rotation of an operating column (61).

7. A tool according to claim 5 or 6, including a body (57) which allows for the independence of said set of bearings (54, 55, 56) with respect to said first connector (2), said first connector (2) remaining locked and fixed during turning of said structure (6) and said second connector (3) carried thereby.

8. A tool according to claim 5, 6 or 7, wherein the rotation is transmitted to said structure (6) by means of slot keys (46, 49), said slot key (46) operating in a vertical slot (45) in the sleeve (47) so as to allow the movement of said vertical compensation system.

9. A tool according to any one of claims 1 to 8, wherein, in said angular compensation system, said articulation (24) operates, in response to accommodation of movements between the second connector (67) of the connector bridge (41) and the second flow line terminal (65), by sliding in spherical-shaped housings (25, 26).

10. A tool according to any one of claims 1 to 9, wherein, in said means for rotating the second connector (3), the rotation of said second connector (3) is effected by simultaneous movement of the piston rods of said rams (21, 22).

11. A tool according to any one of claims 1 to 10, wherein, in said guideline orientation system, the attachment of said guide arm (4) to said first connector (2) is by way of using guidelines.

12. A tool according to any one of claims 1 to 11, when used to position a connector bridge (41) containing two vertical connectors (66) and (67) united by flow/control lines in any desired arrangement between the two flow line terminals (64, 65) which are to be connected, and wherein the flow/control lines are flexible or articulated and include flow lines such as production lines, testing lines, gas lift lines, and water injection lines and also a hydraulic umbilical (for control of functions) and/or electric cables for monitoring and/or driving equipment.

## Patentansprüche

1. Ein Werkzeug für gleichzeitige vertikale Verbindungen zur Verwendung beim Einrichten einer Verbindungsbrücke (41), die einen Verbindungsübergang aus flexiblen Leitungen enthält, die die Verbindung zwischen den zwei Flußleitungsanschlüssen (64,65) herstellen, wobei das Werkzeug folgende Elemente aufweist: hydraulische Vertikal-Verbindungsstücke (2,3) zum Anschließen an Einfangdorne (50,51) der Verbindungsbrücke (41), wobei die Vertikal-Verbindungsstücke (2,3) Trägerschäfte (68,27) aufweisen; ein Vertikal-Kompensationssystem mit einer Aufwärts- und Abwärtsbewegung einer Struktur (6), welche das zweite Verbindungsstück (3) trägt; ein Drehsystem zum Drehen der Struktur (6) mittels eines Satzes von Lagern (54,55,56), die in dem unteren Teil eines Gehäuses (7) des Vertikal-Kompensationssystems angeordnet sind, um es der Struktur (6) zu ermöglichen, relativ zu dem ersten Verbindungsstück (2) gedreht zu werden; ein Führungslinien-Orientierungssystem außerhalb des Gehäuses (7), das aus zwei Strukturarmen (4) besteht, wobei jeder an seinem Ende einen Führungstrichter (5) aufweist, der zur Orientierung mit Kabeln und Führungsstiften verwendet wird; ein Horizontalbewegungssystem mit einem vorzugsweise hydraulischen Kolben (17), der mit einem Teleskoparm (20) verbunden ist, der das zweite Verbindungsstück (3) trägt; ein Winkel-Kompensationssystem für das zweite Verbindungsstück (3), das ein sphärisches Gelenk (24) aufweist, welches mittels eines Stiftes (58) den Trägerschaft (27) des zweiten Verbindungsstückes (3) trägt; und eine Einrichtung zum Drehen des zweiten Verbindungsstükkes (3) durch Ausfahren und Zurückziehen eines vorzugsweise hydraulischen Kolbens (21,22).

2. Ein Werkzeug nach Anspruch 1, wobei in dem Vertikal-Kompensationssystem die Aufwärtsbewegung der Struktur (6) durch die Anwendung von Fluiddruck in einer Kammer (28) erreicht wird.

3. Ein Werkzeug nach Anspruch 1 oder 2, wobei in dem Vertikal-Kompensationssystem die Abwärtsbewegung der Struktur (6) durch die Anwendung eines Fluiddruckes in einer Kammer (29) erreicht wird.

4. Ein Werkzeug nach Anspruch 2 oder 3, wobei die Vertikalbewegung der Struktur (6) mittels Bewegungskomponenten (9,10,11) erreicht wird, die durch Fluiddruck angetrieben werden, und wobei eine Zentralkomponente (8) den Stator des Systems bildet, relativ zu dem die Komponenten (9,10,11) sich bewegen.

5. Ein Werkzeug nach einem der Ansprüche 1 bis 4, wobei in dem Drehsystem zum Drehen der Struktur (6) die oder eine Zentralkomponente (8) an ihrem unteren Ende ein Außengewinde (62) zum Anschließen an einen Körper aufweist, der durch den Satz von Lagern (54,55,56) getragen wird.

6. Ein Werkzeug nach Anspruch 5, wobei der Satz von Lagern (54,55,56) die Drehung der Struktur (6) ermöglicht, die das zweite Verbindungsstück (3) durch Drehung einer Betriebskolonne (61) positioniert.

7. Ein Werkzeug nach Anspruch 5 oder 6, das einen Körper (57) aufweist, der die Unabhängigkeit des Satzes von Lagern (54,55,56) bezüglich des ersten Verbindungsstückes (2) ermöglicht, wobei das erste Verbindungsstück (2) während der Drehung der Struktur (6) verschlossen und fest bleibt und das zweite Verbindungsstück (3) dadurch getragen wird.

8. Ein Werkzeug nach Anspruch 5, 6 oder 7, wobei die Drehung an die Struktur (6) mittels Nutfedern (46,49) übertragen wird, wobei die Nutfeder (46) in einer vertikalen Nut (45) in der Buchse (47) funktionell derart angebracht ist, daß die Bewegung des Vertikal-Kompensationssystems ermöglicht wird.

9. Ein Werkzeug nach einem der Ansprüche 1 bis 8, wobei in dem Winkel-Kompensationssystem das Gelenk (24) entsprechend der Akkomodation bzw. Anpassung von Bewegungen zwischen dem zweiten Verbindungsstück (67) der Verbindungsbrücke (41) und dem zweiten Flußlinienanschluß (65) durch Gleiten in sphärischen Gehäusen (25,26) funktionell wirksam ist.

10. Ein Werkzeug nach einem der Ansprüche 1 bis 9, wobei in der Einrichtung zum Drehen des zweiten Verbindungsstückes (3) die Drehung des zweiten Verbindungsstückes (3) durch gleichzeitige Bewegung der Kolbenstangen der Kolben (21,22) bewirkt wird.

11. Ein Werkzeug nach einem der Ansprüche 1 bis 10, wobei in dem Führungslinien-Orientierungssystem die Anbringung des Führungsarms (4) an das erste Verbindungsstück (2) unter Verwendung von Führungslinien vorgenommen ist.

12. Ein Werkzeug nach einem der Ansprüche 1 bis 11 bei Verwendung zur Positionierung einer Verbindungsbrücke (41), die zwei Vertikal-Verbindungsstücke (66) und (67) aufweist, die durch Fluß-/steuerleitungen in jeder gewünschten Anordnung zwischen den zwei Flußleitungsanschlüssen (64,65) vereinigt sind, die verbunden werden sollen, und wobei die Fluß-/Steuerleitungen flexibel oder gelenkig sind und Flußleitungen, wie z.B. Produktions- bzw. Förderleitungen, Prüfleitungen, Gasliftleitungen und Wasserinjektionsleitungen und auch einen hydraulischen Kabelschlauch (zur Steuerung von Funktionen) und/oder elektrische Kabel für eine Anzeige- und/oder Antriebsausrüstung umfaßt.

## Revendications

1. Outil pour connexions verticales simultanées susceptible d'être utilisé dans l'installation d'un pont de connexion (41) comprenant un cavalier de liaison de conduites flexibles qui assure la connexion entre deux terminaux de conduites d'écoulement (64, 65), comprenant des connecteurs hydrauliques verticaux (2, 3) pour bloquer sur des mandrins d'éclissage (50, 51) du pont de connexion (41), lesdits connecteurs verticaux (2, 3) comprenant des bras de support (68, 27), un système de compensation verticale avec un mouvement ascendant et descendant d'une structure (6) qui supporte le puits du deuxième connecteur (3), un système à rotation pour faire tourner la structure (6) via un jeu de paliers (54, 55, 56) situés dans la partie inférieure d'un boîtier (7) du système de compensation verticale pour permettre la rotation de ladite structure (6) vis-à-vis dudit premier connecteur (2), un système d'orientation de guidage externe au boîtier (7), constitué de deux bras structurels (4), chacun présentant à son extrémité un entonnoir de guidage (5) utilisé pour l'orientation avec des câbles et des supports de guidage, un système à mouvement horizontal ayant un piston de préférence hydraulique (17) couplé à un bras télescopique (20) portant ledit deuxième connecteur (3), un système de compensation angulaire pour ledit deuxième connecteur (3) comprenant une articulation de forme sphérique (24) qui supporte à l'aide d'une broche (58) le bras de support (27) dudit deuxième connecteur (3), et des moyens pour faire tourner ledit deuxième connecteur (3) par extension et retrait d'un piston de préférence hydraulique (21, 22).

2. Outil selon la revendication 1, dans lequel, dans ledit système de compensation verticale, le mouvement ascendant de la structure (6) est réalisé par l'application d'une pression de fluide dans une chambre (28).

3. Outil selon la revendication 1 ou 2, dans lequel, dans ledit système de compensation verticale, le mouvement descendant de ladite structure (6) est obtenu par l'application d'une pression de fluide dans une chambre (29).

4. Outil selon la revendication 2 ou 3, dans lequel le mouvement vertical de ladite structure (6) est obtenu à l'aide de composants mobiles (9, 10, 11) entraînés par une pression de fluide et dans lequel un composant central (8) forme le stator du système par rapport auquel les composants (9, 10, 11) se déplacent.

5. Outil selon l'une quelconque des revendications 1 à 4, dans lequel, dans ledit système à rotation pour faire tourner la structure (6), le ou un composant central (8) a, à son extrémité inférieure, un filet mâle (62) pour coupler à un corps supporté par ledit jeu de paliers (54, 55, 56).

6. Outil selon la revendication 5, dans lequel ledit jeu de paliers (54, 55, 56) permet de faire tourner ladite structure (6) qui positionne ledit deuxième connecteur (3) par rotation d'une colonne de service (61).

7. Outil selon la revendication 5 ou 6, comprenant un corps (57) qui assure l'indépendance dudit jeu de paliers (54, 55, 56) par rapport audit premier connecteur (2), ledit premier connecteur (2) restant bloqué et fixé au cours de la rotation de ladite structure (6) et dudit deuxième connecteur (3) porté par celle-ci.

8. Outil selon la revendication 5, 6 ou 7, dans lequel la rotation est transmise à ladite structure (6) à l'aide de clavettes (46, 49), ladite clavette (46) opérant dans une fente verticale (45) du manchon (47) pour permettre le déplacement dudit système de compensation verticale.

9. Outil selon l'une quelconque des revendications 1 à 8, dans lequel, dans ledit système de compensation angulaire, ladite articulation (24), en réponse à l'accomodation de mouvements entre le deuxième connecteur (67) du pont de connexion (41) et le deuxième terminal de conduite d'écoulement (65), glisse dans des carters de forme sphérique (25, 26).

10. Outil selon l'une quelconque des revendications 1 à 9, dans lequel, dans lesdits moyens de rotation du deuxième connecteur (3), la rotation dudit deuxième connecteur (3) est effectué par un mouvement simultané des tiges desdits pistons (21, 22).

11. Outil selon l'une quelconque des revendications 1 à 10, dans lequel, dans ledit système d'orientation de lignes de guidage, la fixation dudit bras de guidage (4) audit premier connecteur (2) se fait en utilisant des lignes de guidage.

12. Outil selon l'une quelconque des revendications 1 à 11, lorsqu'il est utilisé pour positionner un pont de connexion (41) contenant deux connecteurs verticaux (66) et (67) unis par des conduites d'écoulement ou de réglage selon n'importe quel agencement souhaité entre les deux terminaux de conduites d'écoulement (64, 65) qui doivent être connectés et dans lequel les conduites d'écoulement ou de réglage sont flexibles ou articulées et comprennent des conduites d'écoulement telles que des conduites de production, des conduites d'essai, des conduites d'extraction de gaz et des conduites d'injection d'eau et également une conduite ombilicale hydraulique (pour le réglage de fonctions) et/ou des câbles électriques pour contrôler et/ou commander l'équipement.
